# EUROPÄISCHE PATENTSCHRIFT

(11) **EP 0 969 191 B1**
(45) Veröffentlichungstag und Bekanntmachung des Hinweises auf die Patenterteilung: **17.11.2004**
(21) Anmeldenummer: 99110760.8
(22) Anmeldetag: 04.06.1999
(51) Int. Cl.: F02B 3/06, F02F 3/26, F02B 23/06

(54) **Kolben für eine Dieselbrennkraftmaschine**
Diesel engine piston
Piston pour un moteur diesel

(30) Priorität: 01.07.1998 DE 19829384
(43) Veröffentlichungstag der Anmeldung: 05.01.2000
(73) Patentinhaber: MAN NUTZFAHRZEUGE AG, 80995 München (DE)
(72) Erfinder: Röthlein, Bernhard, Dipl.-Ing., 90425 Nürnberg (DE)

(56) Entgegenhaltungen:
- DE-A- 4 415 073
- DE-A- 19 530 072
- FR-A- 1 243 730
- JP-A- 3 279 617
- US-A- 2 831 468
- PATENT ABSTRACTS OF JAPAN vol. 007, no. 025 (M-190), 2. Februar 1983 (1983-02-02) & JP 57 181926 A (NISSAN JIDOSHA KK), 9. November 1982 (1982-11-09)

## Beschreibung

Die Erfindung bezieht sich auf einen Kolben für eine Diesel-Brennkraftmaschine, bei der in einem Kolbenboden ein Brennraum vorgesehen ist.

Diesel-Brennkraftmaschinen mit direkter Einspritzung weisen einen Brennraum im Kolbenboden auf, welcher meist topfförmig ausgebildet ist und der konzentrisch zur Zylinderachse angeordnet wird. Nachteilig ist bei einem derartigen Brennraum, daß es bei spätem Einspritzzeitpunkt und langer Einspritzzeit, wie es zur Erfüllung von Euro III erforderlich ist, zu einer starken Verschmutzung des Öls kommt. Die Ursache hierfür ist in Rußteilchen aus der Verbrennung und in der Verkokung des Öls an der Zylinderwand durch thermische Einwirkung aus der Verbrennung zu suchen.

In diesem Zusammenhang ist es aus der JP 03 279 617 A bekannt, um den Brennraum im Kolbenboden eine umlaufende Mulde vorzusehen, die sich zur Kolbenoberfläche hin verjüngt und damit eine Drossel ausbildet. Der in der Mulde befindliche Luftvorrat soll dabei einerseits die Verbrennung unterstützen und andererseits die Zylinderwände gegen den Verbrennungsvorgang abschirmen. Die Abschirmfunktion ist dabei jedoch nicht optimal, weil durch die Ausbildung der Drossel die Austrittsöffnung aus der umlaufenden Mulde zu weit von der Zylinderwand weg liegt.

Der Erfindung liegt deshalb die Aufgabe zugrunde, die Abschirmfunktion zu verbessern und damit die Verschmutzung des Öls zu vermeiden.

Gelöst wird diese Aufgabe durch die kennzeichnenden Merkmale des Patentanspruches 1.

Die umlaufende Mulde im Kolbenboden bildet dadurch, dass sie dicht an der Zylinderwand liegt, durch die eingeschlossene Luft einen Schutz des Ölfilms an der Zylinderwand vor thermischer Einwirkung, solange die Verbrennung anhält. Beim Abtauchen des Kolbens stellt die in der Mulde eingeschlossene Luft lokal mehr Sauerstoff für eine verbesserte Verbrennung bereit.

Eine vorteilhafte Ausbildung des Brennraumes im Kolbenboden und der umlaufenden Mulde kann Patentanspruch 2 entnommen werden.

Ein Ausführungsbeispiel des erfindungsgemäßen Kolbens ist an Hand einer Zeichnung dargestellt.

Ein Kolben 1 weist in seinem Kolbenboden 2 einen Brennraum 3mit einem Volumen V₁ auf, welcher im dargestellten Beispiel topfförmig ausgebildet ist und der koaxial oder leicht exzentrisch zur Zylinderachse angeordnet ist. Erfindungsgemäß weist der Kolbenboden 2 eine ebenfalls koaxial zur Zylinderachse angeordnete umlaufende Mulde 4 mit einem Volumen V₂ auf Diese umlaufende Mulde 4 ist so dimensioniert, daß ihr Volumen V₁ zwischen 5 und 20 % des gesamten Brennraumvolumens V₀ betragen soll. Das gesamte Brennraumvolumen V₀ besteht aus der Summe der Volumina V₁ und V₂.

Der Durchmesser d der Mulde 4 soll dabei mindestens 90 % des Kolbendurchmessers D betragen.

Durch die in der umlaufenden Mulde 4 eingeschlossene Luft wird die mit einem Ölfilm benetzte Zylinderwand vor unmittelbarer thermischer Einwirkung wirkungsvoll geschützt. Ein weiterer Vorteil der Mulde 4 ist darin zu sehen, daß beim Abtauchen des Kolbens zusätzliche Verbrennungsluft zur Verfügung gestellt wird, so daß unverbrannte Rußpartikel nachoxidiert werden, bevor sie das an der Zylinderwand anhaftende Schmieröl verunreinigen.

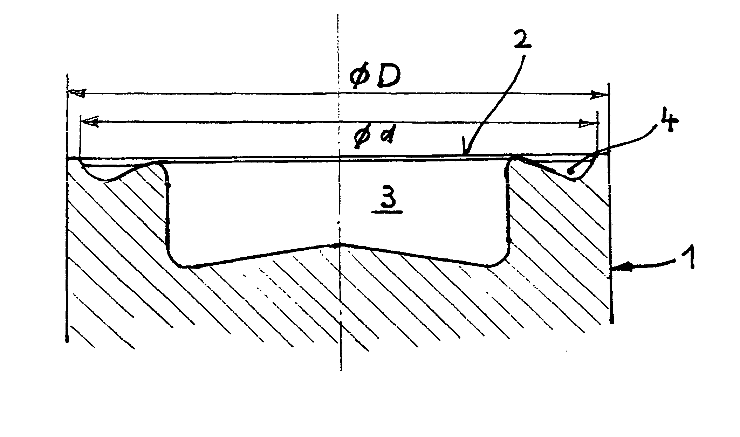

## Patentansprüche

1. Kolben für eine Diesel-Brennkraftmaschine, bei der in einem Kolbenboden ein Brennraum vorgesehen ist, wobei der im Kolben liegende Brennraum (3) mit einem Volumen V₁ von einer umlaufenden Mulde (4) mit einem Volumen V₂ im Kolbenboden (2) umgeben ist, **dadurch gekennzeichnet, dass** der Außendurchmesser (d) der umlaufenden Mulde (4) an der Kolbenoberfläche mindestens 90 % des Zylinderdurchmessers (D) beträgt und dass das Volumen V₂ der Mulde (4) zwischen 5 % und 20 % des gesamten Brennraum-Volumens V₀ = V₁ + V₂ beträgt.

2. Kolben nach Anspruch 1, **dadurch gekennzeichnet, daß** der Brennraum (3) topfförmig und zur Zylinderachse konzentrisch oder leicht exzentrisch liegend ausgebildet ist, und daß die umlaufende Mulde (4) ebenfalls konzentrisch zur Zylinderachse angeordnet ist.

## Claims

1. A piston for a diesel combustion engine, in which a combustion chamber is provided in a piston head, the combustion chamber (3) located within the piston having a volume V₁ and being surrounded by an encircling trough (4) with a volume V₂ in the piston head (2), **characterised in that** the outer diameter (d) of the encircling trough (4) on the piston surface is at least 90% of the cylinder diameter (D) and **in that** the volume V₂ of the trough (4) is between 5% and 20% of the combustion chamber as a whole V₀ = V₁ + V₂.

2. A piston according to Claim 1, **characterised in that** the combustion chamber (3) is of a crucible-shaped design and is positioned concentrically or slightly eccentrically to the axis of the cylinder, and **in that** the encircling trough (4) is similarly arranged concentrically to the cylinder axis.

## Revendications

1. Piston de moteur Diesel dont le fond de piston comporte une chambre de combustion, la chambre de combustion (3) du piston ayant un volume V₁ entouré par une gorge périphérique (4) de volume V₂ dans le fond de piston (2),
**caractérisé en ce que**
le diamètre extérieur (d) de la gorge périphérique (4) de la surface supérieure du piston représente au moins 90 % du diamètre (D) du cylindre et le volume V₂ de la gorge (4) représente entre 5 % et 20 % du volume total de la chambre de combustion V₀ = V₁ + V₂.

2. Piston selon la revendication 1,
**caractérisé en ce que**
la chambre de combustion (3) est en forme de pot et est concentrique à l'axe du cylindre ou elle est couchée légèrement de façon excentrée et la gorge périphérique (4) est également concentrique à l'axe du cylindre.
